# DEMANDE DE BREVET EUROPEEN

(11) **EP 0 819 945 A1**
(43) Date de publication de la demande: **21.01.1998**
(21) Numéro de dépôt: 97401717.0
(22) Date de dépôt: 16.07.1997
(51) Int. Cl.: G01R 29/027

(54) **Montage pour la mesure d'une durée de coupure d'un système électronique**

(30) Priorité: 17.07.1996 FR 9608933
(71) Demandeur: VALEO ELECTRONIQUE, 94000 Creteil (FR)
(72) Inventeur: Baravian, Philippe, 94140 Alfortville (FR); Permuy, Alfred, 92500 Rueil Malmaison (FR)
(74) Mandataire: Martin, Jean-Jacques

(57) **Abrégé**

Montage pour la mesure de la durée d'une coupure de l'alimentation d'un système électronique, caractérisé en ce qu'il comporte d'une part un pont diviseur de tension (1, 2) dont la tension d'alimentation (Vdd) est dérivée de l'alimentation du système électronique et dont une branche présente une résistance (CTN₁, CTN₂) variable en fonction de la température, et d'autre part une unité de traitement (µP) à laquelle la sortie (E₁, E₂) du pont diviseur (1, 2) est reliée et qui détermine en fonction de la valeur de la tension (V₁, V₂) de cette sortie à l'issue d'une coupure, la durée de celle-ci.

## Description

La présente invention est relative à un montage permettant la mesure de la durée de la coupure de l'alimentation d'un système électronique.

Un tel montage trouve en particulier avantageusement application dans les dispositifs de gestion de la commande de l'alimentation des moteurs électriques de démarreurs de véhicules automobiles.

Classiquement, un tel dispositif de gestion commande la coupure de l'alimentation du moteur électrique d'un démarreur dès que le moteur thermique du véhicule est lancé ou, en cas de non démarrage, au bout d'un temps déterminé, afin d'éviter de noyer le moteur thermique et d'affaiblir la batterie.

Lorsque le conducteur tourne à nouveau la clé de contact de son véhicule, il est souhaitable que le dispositif de gestion empêche l'alimentation du démarreur si cette nouvelle sollicitation intervient trop rapidement.

Le dispositif de gestion doit donc comporter des moyens qui lui permettent de déterminer, lorsqu'il est à nouveau alimenté lors de la fermeture du contact par l'opérateur, quelle durée s'est écoulée entre la coupure du démarreur et cette nouvelle sollicitation.

Or, l'absence d'alimentation du dispositif de gestion pendant cette durée empêche d'utiliser une horloge interne à cet effet.

Les montages que l'on connaît à ce jour pour mesurer la durée de la coupure d'un circuit sont généralement des montages de type RC, dont le condensateur se charge quand le circuit est alimenté et se décharge quand son alimentation est coupée.

Lorsque le circuit est à nouveau alimenté, la mesure de la tension aux bornes du condensateur de ce montage permet d'accéder à une valeur de la durée de la coupure.

Toutefois, ce type de montage est fortement limité quant aux durées qu'il permet de déterminer. Il ne permet au mieux que d'accéder à des durées de l'ordre de la fraction de seconde du fait des courants de fuite.

En particulier, la tenue en température de ce type de montage n'est pas satisfaisante, les courants de fuite étant élevés à haute température.

Egalement, ces montages RC nécessitent des composants à forte valeur de capacitance et résistance, dont la taille ne permet pas leur montage dans le boîtier du démarreur.

Un but de l'invention est donc de proposer un montage qui permet des mesures de durée de coupure sur des bases de temps plus importantes.

Un autre but de l'invention est de proposer un montage fiable à température élevée.

Un autre but de l'invention encore est de proposer un montage d'une grande simplicité de réalisation, facilement intégrable.

L'invention propose quant à elle un montage pour la mesure de la durée d'une coupure de l'alimentation d'un système électronique, caractérisé en ce qu'il comporte d'une part un pont diviseur de tension dont la tension d'alimentation est dérivée de l'alimentation du système électronique et dont une branche présente une résistance variable en fonction de la température, et d'autre part une unité de traitement à laquelle la sortie du pont diviseur est reliée et qui détermine en fonction de la valeur de la tension de cette sortie à l'issue d'une coupure, la durée de celle-ci.

Avantageusement, ce montage comporte deux tels ponts diviseurs de tension à branche à résistance variable en fonction de la température, l'unité de traitement déterminant la durée d'une coupure en fonction des différences des tensions en sortie de chacun de ces deux ponts, d'une part avant le début de la coupure et d'autre part à l'issue de cette coupure.

Une résistance variable peut notamment être du type à coefficient de température négatif.

Avantageusement, la sortie d'un pont diviseur est reliée à la masse par l'intermédiaire d'un interrupteur commandé par l'unité de traitement selon une séquence cyclique d'ouverture et de fermeture, dont le rapport cyclique est choisi de façon à maintenir la valeur de la tension de sortie du pont diviseur sur une valeur de consigne prédéterminée.

Préférentiellement, la sortie de chacun des deux ponts diviseurs est reliée à la masse par l'intermédiaire d'un interrupteur, ces deux interrupteurs étant commandés par l'unité de traitement selon des séquences cycliques d'ouverture et de fermeture, dont les rapports cycliques sont choisis de façon à maintenir la différence des tensions de sortie de ces ponts diviseurs sur une valeur de consigne prédéterminée.

D'autres caractéristiques et avantages de l'invention ressortiront encore de la description qui suit. Cette description est purement illustrative et non limitative. Elle doit être lue en regard des figures annexée sur lesquelles on a illustré un mode de réalisation possible pour l'invention. Sur ces figures :
- la figure 1 est une représentation schématique de ce mode de réalisation ;
- la figure 2 est un graphe sur lequel on a représenté en fonction du temps la courbe de la tension en sortie d'un pont diviseur du mode de réalisation de la figure 1.

Le montage illustré sur cette figure comporte un microprocesseur µP, ainsi que deux ponts diviseurs 1 et 2.

Ce microprocesseur µP gère la commande de l'alimentation en tension d'un moteur électrique de démarreur.

Les ponts diviseurs 1 et 2 sont alimentés à une tension régulée Vdd dérivée de la tension d'alimentation du bloc démarreur.

Le pont diviseur 1 est constitué d'une résistance R₁ montée entre la masse et un point E₁ relié à une entrée du microprocesseur µP, ainsi que d'une résistance CTN₁ dont la valeur est variable avec la température et qui est montée entre ce point E₁ et une borne d'alimentation à la tension Vdd

Le pont diviseur 2 est constitué d'un montage similaire, et comprend d'une part une résistance R₂ montée entre la masse et un deuxième point E₂ sur le microprocesseur µP et d'autre part une résistance CTN₂ à valeur variable en fonction de la température montée entre ce point et un point d'alimentation à la tension Vdd.

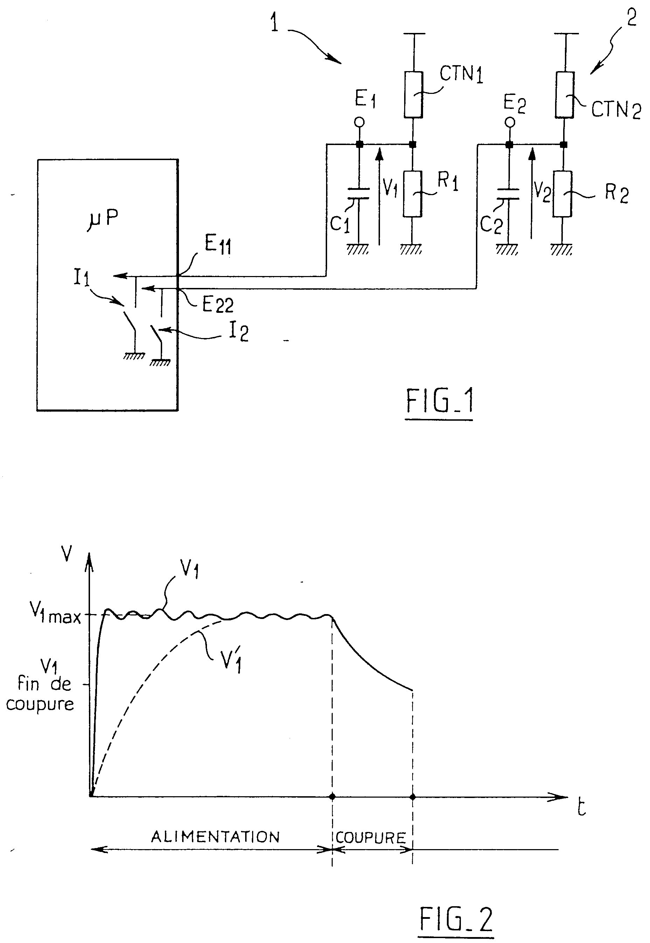

Sur la figure 1, les entrées du microprocesseur µP qui reçoivent les tensions aux points E₁ et E₂, ont été plus particulièrement référencées par E₁₁ et E₂₂ respectivement.

Lors de phases de mesure, elles réalisent la conversion analogique/numérique des tensions qu'elles reçoivent, les valeurs numériques ainsi obtenues étant traitées par le microprocesseur µP.

Lors de phases de commande, elles relient également à la masse les points E₁ et E₂ par l'intermédiaire d'interrupteurs référencés respectivement par I₁, I₂ commandés par le microprocesseur µP, lorsque celui-ci est alimenté.

Des condensateurs de filtrage C₁ et C₂ sont montés entre ces points E₁ et E₂ et la masse. Ces condensateurs servent aussi à stabiliser les tensions aux points E₁ et E₂ en vue de la conversion A/D sur l'entrée correspondante du µP.

Dans l'exemple qui est ici décrit, la résistance R₁ est d'une valeur égale à celle de la résistance R₂ et les résistances variables CTN₁ et CTN₂ sont du type à coefficient de température négatif et sont identiques.

Bien entendu, des résistances à coefficient de température positif pourraient de la même façon être utilisées.

Les résistances CTN₁ et CTN₂ sont choisies de même valeur de façon qu'à température ambiante les tensions V₁ et V₂ aux points d'entrée E₁ et E₂ soient égales.

Lorsqu'un opérateur tourne la clé de contact pour solliciter une première-fois le démarreur du véhicule, le microprocesseur µP, qui est alimenté, commande l'ouverture et la fermeture des interrupteurs I₁ et I₂ selon des séquences hachées, dont les rapports cycliques sont différents pour I₁ et I₂.

Les fermetures des interrupteurs I₁ et I₂ vont rapidement échauffer les résistances CTN₁ et CTN₂, de sorte que les tensions V₁ et V₂ prennent rapidement des valeurs maximales, ainsi qu'illustré notamment par la courbe V₁ sur la figure 2.

On notera que l'on a également représenté en pointillés sur cette figure 2 la courbe donnant l'évolution de la tension au point E₁, en l'absence de la mise à la masse que réalise la commande hachée de l'interrupteur I₁ (courbe V'1). On comprend en comparant cette courbe V'1 à la courbe V₁ que la mise à la masse réalisée par les interrupteurs I₁ et I₂ permet aux tensions V₁ et V₂ d'atteindre très rapidement leurs valeurs maximales et qu'en l'absence de ces interrupteurs, les tensions V₁ et V₂ évolueraient vers ces valeurs maximales selon une variation exponentielle, avec une constante de temps due aux termes R₁C₁ et R₂C₂.

Le microprocesseur µP régule les rapports cycliques des interrupteurs I₁ et I₂, de façon à maintenir les valeurs maximales des tensions V₁ et V₂ sur des valeurs de consigne différentes préalablement choisies, la valeur maximale de la tension V₂ étant par exemple choisie supérieure à la valeur maximale de la tension V₁.

La différence de tension entre V₁ et V₂ est ainsi entretenue pendant tout le temps où le démarreur est alimenté.

Lorsque l'alimentation du démarreur est coupée, par exemple si l'opérateur interrompt sa sollicitation de la clé de contact, la température des résistances CTN₁ et CTN₂ va chuter progressivement vers la température ambiante.

Lorsque l'opérateur sollicite à nouveau sa clé et remet le contact, le microprocesseur µP et les ponts 1 et 2 sont à nouveau alimentés. La mesure de la différence de tension V₂ - V₁ à la remise du contact est traitée par le microprocesseur µP pour en déduire le temps qui s'est écoulé entre la coupure de l'alimentation et la nouvelle sollicitation.

A titre d'exemple, pour une tension régulée Vdd de 5 V, une valeur de résistance R₁ de 330 Ω, une valeur de 330 Ω pour R₂ et des résistances CTN₁ et CTN₂ de type 470, on considère, si les tensions V₁ et V₂ sont égales, que plus de 15 secondes se sont écoulées entre les deux sollicitations successives. Le microprocesseur µP autorise alors l'alimentation du moteur électrique du démarreur.

Si au contraire V₂ est supérieur à V₁, le microprocesseur µP détermine, en fonction d'une table de correspondance, le temps écoulé entre les deux sollicitations, puis déroule la stratégie correspondante.

Les condensateurs C₁ et C₂ sont d'une capacitance choisie égale à 22 nF. Les interrupteurs I₁ et I₂ quant à eux sont choisis de façon à pouvoir supporter un courant important.

Ainsi, avec le montage qui vient d'être décrit, on dispose d'une base de temps permettant de mesurer des durées allant jusqu'à 15 s.

Ces mesures sont indépendantes de la température.

En outre, un tel montage présente une grande tenue en température et est en particulier susceptible de supporter des températures élevées supérieures à 70°C.

Par ailleurs, les composants du montage qui vient d'être décrit présentent des valeurs qui sont facilement intégrables.

D'autres variantes de réalisation de l'invention sont possibles. En particulier, dans le cas d'un montage à deux ponts diviseurs à branches à résistance variable, il peut être prévu de maintenir ouvert l'un des deux interrupteurs de mise à la masse de leur tension de sortie, l'autre interrupteur étant quant à lui commandé de façon hachée. Le pont diviseur dont l'interrupteur est toujours ouvert permet de déterminer la température ambiante par rapport à laquelle la température de l'autre pont diviseur évolue.

Le montage peut également ne comporter qu'un seul pont à résistance variable en fonction de la température. L'autre pont est alors avantageusement remplacé par des moyens permettant de connaître la température ambiante du système électronique dont la durée de coupure d'alimentation est mesurée, ces moyens comportant par exemple un capteur semi-conducteur ou un thermocouple.

L'invention vient d'être décrite dans le cas d'une mesure de la durée de la coupure de l'alimentation d'un démarreur de véhicule automobile, application pour laquelle le montage proposé par l'invention est particulièrement avantageux. D'autres applications de mesure de durée sont bien entendu envisageables pour l'invention.

## Revendications

1. Montage pour la mesure de la durée d'une coupure de l'alimentation d'un système électronique, caractérisé en ce qu'il comporte d'une part un pont diviseur de tension (1, 2) dont la tension d'alimentation (Vdd) est dérivée de l'alimentation du système électronique et dont une branche présente une résistance (CTN₁, CTN₂) variable en fonction de la température, et d'autre part une unité de traitement (µP) à laquelle la sortie (E₂, E₂) du pont diviseur (1, 2) est reliée et qui détermine en fonction de la valeur de la tension (V₁, V₂) de cette sortie à l'issue d'une coupure, la durée de celle-ci.

2. Montage selon la revendication 1, caractérisé en ce qu'il comporte deux tels ponts (1, 2) diviseurs de tension à branche à résistance variable en fonction de la température, l'unité de traitement (µP) déterminant la durée d'une coupure en fonction des différences des tensions en sortie de chacun de ces deux ponts, d'une part avant le début de la coupure et d'autre part à l'issue de cette coupure.

3. Montage selon l'une des revendications précédentes, caractérisé en ce qu'il comporte des moyens pour la mesure de la température ambiante du système électronique reliés à l'unité de traitement (µP), ladite unité de traitement (µP) déterminant la durée d'une coupure en fonction également de la température mesurée par ces moyens.

4. Montage selon l'une des revendications précédentes, caractérisé en ce que la sortie d'un pont diviseur (1, 2) est reliée à la masse par l'intermédiaire d'un interrupteur (I₁, I₂) commandé par l'unité de traitement (µP) selon une séquence cyclique d'ouverture et de fermeture, dont le rapport cyclique est choisi de façon à maintenir la valeur de la tension de sortie du pont diviseur (1, 2) sur une valeur de consigne prédéterminée.

5. Montage selon la revendication 2 prise seule ou en combinaison avec l'une des revendications 3 ou 4, caractérisé en ce que la sortie de chacun des deux ponts diviseurs (1,2) est reliée à la masse par l'intermédiaire d'un interrupteur (I₁, I₂), ces deux interrupteurs (I₁, I₂) étant commandés par l'unité de traitement (µP) selon des séquences cycliques d'ouverture et de fermeture, dont les rapports cycliques sont choisis de façon à maintenir la différence des tensions de sortie de ces ponts diviseurs sur une valeur de consigne prédéterminée.

6. Montage selon l'une des revendications précédentes, caractérisé en ce qu'une résistance variable (CTN₁, CTN₂) est du type à coefficient de température négatif.

7. Montage selon l'une des revendications 1 à 5, caractérisé en ce qu'une résistance variable est du type à coefficient de température positif.

8. Montage pour la mesure de la durée d'une coupure de l'alimentation d'un moteur électrique de démarreur de véhicule automobile, caractérisé en ce qu'il est constitué par un montage selon l'une des revendications précédentes.

9. Montage selon la revendication 8, caractérisé en ce que l'unité de traitement (µP) et l'unité de gestion de la commande de l'alimentation du moteur électrique du démarreur sont confondues.
